# EUROPEAN PATENT APPLICATION

(11) **EP 4 550 897 A1**
(43) Date of publication of application: **07.05.2025**
(21) Application number: 23830248.3
(22) Date of filing: 27.06.2023
(51) Int. Cl.: H04W 52/02

(54) **LP-WUS-BASED PAGING METHOD AND APPARATUS, DEVICE, SYSTEM, AND STORAGE MEDIUM**

(30) Priority: 01.07.2022 CN 202210775662
(71) Applicant: Vivo Mobile Communication Co., Ltd., Dongguan, Guangdong 523863 (CN)
(72) Inventor: LIU, Xuanbing, Dongguan, Guangdong 523863 (CN)
(74) Representative: Murgitroyd & Company
(86) International application number: PCT/CN2023/102754
(87) International publication number: WO 2024/002071

(57) **Abstract**

This application discloses an LP-WUS-based paging method and apparatus, a device, a system, and a storage medium and pertains to the field of communication technologies. The LP-WUS-based paging method in embodiments of this application includes: executing, by UE, LP-WUS monitoring; and executing, by the UE, a first action in a case of detecting a first LP-WUS, the first LP-WUS being used to wake up or page the UE; where the first action includes at least one of the following: leaving a low power state; entering an idle state; waking up a main communication module in the UE; or monitoring a paging occasion or receiving a paging message.

## Description

### CROSS-REFERENCE TO RELATED APPLICATION

This application claims priority to Chinese Patent Application No. 202210775662.0, filed in China on July 01, 2022, which is incorporated herein by reference in its entirety.

### TECHNICAL FIELD

This application pertains to the field of communication technologies, and specifically relates to a LP-WUS-based paging method and apparatus, a device, a system, and a storage medium.

### BACKGROUND

In communication systems, low power user equipment (User equipment, UE) includes two modules, namely a main communication module and a low power receiving module. The former is used for transmitting and receiving mobile communication data, while the latter is used for receiving LP-WUS. The UE in a low power state turns on the low power receiving module to monitor LP-WUS signals and turn off the main communication module. The UE receives a low power wake-up signal (Low Power Wake-Up Signal, LP-WUS) through a low power receiver for waking up a main communication module. The UE needs to continuously monitor an LP-WUS to identify whether it is being paged or not, and then wake up the main communication module at any time to receive a paging message.

In order to further achieve power saving, how the UE can reduce false wake-ups in a low power receiving mode, that is, to avoid wake-up of the main communication module of the UE when there is no indication of paging the UE, is an urgent problem to be solved.

### SUMMARY

Embodiments of this application provides an LP-WUS-based paging method and apparatus, a device, a system, and a storage medium, to solve the problem on how UE in low power receiving mode avoids wake-up of a main communication module of the UE when there is no indication of paging the UE.

According to a first aspect, an LP-WUS-based paging method is provided. The method includes: executing, by UE, LP-WUS monitoring; and executing, by the UE, a first action in a case of detecting a first LP-WUS, the first LP-WUS being used to wake up or page UE; where the first action includes at least one of the following:
leaving a low power state;
entering an idle state;
waking up a main communication module in the UE; or
monitoring a paging occasion or receiving a paging message.

According to a second aspect, an LP-WUS-based paging apparatus is provided, applied to UE. The LP-WUS-based paging apparatus includes a monitoring module and an execution module. The monitoring module is configured to execute LP-WUS monitoring. The execution module is configured to execute a first action in a case that the monitoring module detects a first LP-WUS, the first LP-WUS being used to wake up or page the UE; where the first action includes at least one of the following:
leaving a low power state;
entering an idle state;
waking up a main communication module in the UE; or
monitoring a paging occasion or receiving a paging message.

According to a third aspect, an LP-WUS-based paging method is provided. The method includes: sending, by a network-side device, a first LP-WUS to UE, the first LP-WUS being used to wake up or page the UE; where the first LP-WUS is used for the UE to execute a first action, and the first action includes at least one of the following:
leaving a low power state;
entering an idle state;
waking up a main communication module in the UE; or
monitoring a paging occasion or receiving a paging message.

According to a fourth aspect, an LP-WUS-based paging apparatus is provided, applied to a network-side device. The LP-WUS-based paging apparatus includes a sending module. The sending module is configured to send a first LP-WUS to UE, the first LP-WUS being used to wake up or page the UE; where the first LP-WUS is used for the UE to execute a first action, and the first action includes at least one of the following:
leaving a low power state;
entering an idle state;
waking up a main communication module in the UE; or
monitoring a paging occasion or receiving a paging message.

According to a fifth aspect, UE is provided, where the UE includes a processor and a memory. The memory has stored thereon a program or instruction capable of running on the processor. When the program or instruction is executed by the processor, the steps of the method according to the first aspect are implemented.

According to a sixth aspect, UE is provided, including a processor and a communication interface, where the processor is configured to execute LP-WUS monitoring and execute a first action in a case of detecting a first LP-WUS, the first LP-WUS being used to wake up or page the UE; where the first action includes at least one of the following: leaving a low power state; entering an idle state; waking up a main communication module in the UE; or monitoring a paging occasion or receiving a paging message.

According to a seventh aspect, a network-side device is provided, where the network-side device includes a processor and a memory. The memory has stored thereon a program or instruction capable of running on the processor. When the program or instruction is executed by the processor, the steps of the method according to the third aspect are implemented.

According to an eighth aspect, a network-side device is provided, including a processor and a communication interface, where the communication interface is configured to send a first LP-WUS to UE, the first LP-WUS being used to wake up or page the UE; where the first LP-WUS is used for the UE to execute a first action, and the first action includes at least one of the following: leaving a low power state; entering an idle state; waking up a main communication module in the UE; or monitoring a paging occasion or receiving a paging message.

According to a ninth aspect, a communication system is provided, including UE and a network-side device, where the UE can be configured to execute the steps of the LP-WUS-based paging method according to the first aspect, and the network-side device can be configured to execute the steps of the LP-WUS-based paging method according to the third aspect.

According to a tenth aspect, a readable storage medium is provided, where a program or instruction is stored in the readable storage medium, and when the program or instruction is executed by a processor, the steps of the method according to the first aspect are implemented, or the steps of the method according to the third aspect are implemented.

According to an eleventh aspect, a chip is provided, where the chip includes a processor and a communication interface. The communication interface is coupled to the processor, and the processor is configured to run a program or instruction to implement the method according to the first aspect or to implement the method according to the third aspect.

According to a twelfth aspect, a computer program/program product is provided, where the computer program/program product is stored in a storage medium, and the computer program/program product is executed by at least one processor to implement the steps of the LP-WUS-based paging method according to the first aspect, or implement the steps of the LP-WUS-based paging method according to the third aspect.

In embodiments of this application, UE can execute LP-WUS monitoring, and execute a first action in a case of detecting a first LP-WUS used to wake up or page the UE. The first action includes at least one of the following: leaving a low power state; entering an idle state; waking up a main communication module in the UE; or monitoring a paging occasion or receiving a paging message. In this solution, in a low power receiving mode, the UE in executing LP-WUS monitoring can execute a wake-up or paging related action in a case of detecting an LP-WUS used to wake up or page the UE, meaning that the LP-WUS can be used to indicate paging or wake-up to the UE in this solution. Therefore, the UE in the low power receiving mode executes the wake-up or paging related action only when detecting the LP-WUS indicating to page or wake up the UE. This avoids the problem of falsely waking up a main communication module of the UE when there is no indication of paging the UE, achieving the purposes of power saving and improving the accuracy of UE paging.

### BRIEF DESCRIPTION OF DRAWINGS

FIG. 1 is a schematic architectural diagram of a wireless communication system according to an embodiment of this application;
FIG. 2 is a schematic structural diagram of a communication module of UE in related art;
FIG. 3 is a first flowchart of an LP-WUS-based paging method according to an embodiment of this application;
FIG. 4 is a second flowchart of an LP-WUS-based paging method according to an embodiment of this application;
FIG. 5 is a third flowchart of an LP-WUS-based paging method according to an embodiment of this application;
FIG. 6 is a fourth flowchart of an LP-WUS-based paging method according to an embodiment of this application;
FIG. 7 is a first schematic structural diagram of an LP-WUS-based paging apparatus according to an embodiment of this application;
FIG. 8 is a second schematic structural diagram of an LP-WUS-based paging apparatus according to an embodiment of this application;
FIG. 9 is a third schematic structural diagram of an LP-WUS-based paging apparatus according to an embodiment of this application;
FIG. 10 is a schematic structural diagram of a hardware structure of a communication device according to an embodiment of this application;
FIG. 11 is a schematic diagram of a hardware structure of UE according to an embodiment of this application; and
FIG. 12 is a schematic diagram of a hardware structure of a network-side device according to an embodiment of this application.

### DETAILED DESCRIPTION

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6-th generation (6^{th} Generation, 6G) communication system.

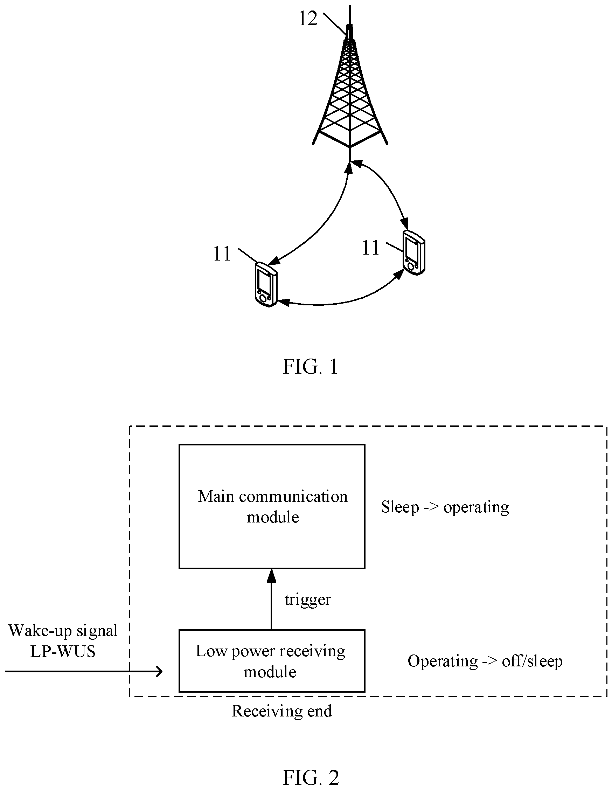

FIG. 1 is a block diagram of a wireless communication system to which embodiments of this application may be applicable. The wireless communication system includes UE 11 and a network-side device 12. The UE 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), or pedestrian user equipment (PUE), a smart appliance (a household device with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that the UE 11 is not limited to a specific type in the embodiments of this application. The network-side device 12 can include an access network device or core network device, where the access network device 12 can also be referred to as a radio access network device, radio access network (Radio Access Network, RAN), radio access network function, or radio access network unit. The access network device 12 can include base stations, WLAN access points, Wi-Fi nodes, or the like. The base station can be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the base station is not limited to any specific type.

Some concepts and/or terms involved in an LP-WUS-based paging method and apparatus, a device, a system, and a storage medium that are provided in embodiments of this application are explained below.

### 1. Time domain structure of wake-up signal (WUS) in 802.11ba protocol

A physical layer protocol data unit (Physical Layer Protocol Data Unit, PPDU) of the wake-up signal includes legacy short training field (Legacy Short Training Field, L-STF), legacy long training field (legacy Long Training Field, L-LTF), legacy signal field (Legacy Signal Field, L-SIG), binary phase shift keying (Binary Phase Shift Keying, BPSK)-mark 1 (Mark1) field, BPSK-Mark2 field, wake-up receiver (Wake-Up Receiver, WUR)-sync (Sync) field, and WUR-data (Data) field. Among them, the first five fields are designed for coexistence with existing users of the protocol and do not have low power wake-up capabilities, and the receiver does not decode them, while the last two fields serve as the synchronization field and field for the low power wake-up signal, respectively. The synchronization field includes sequences of two lengths: 64 us and 128 us, which respectively indicate two data rates of the data field: 62.5 kbs and 250 kbs. On-off keying (On-Off Keying, OOK) symbols with a length of 2 us are used to send the synchronization field and data field at a low rate, and OOK symbols with a length of 4 us are used to send the data field at a high rate.

### 2. LP-WUS signal in NR

LP-WUS is a low power wake-up signal, received through a low power receiver, and used to wake up a main communication module or the like. As shown in FIG. 2, UE includes two modules. The first module is a main communication module for sending and receiving mobile communication data, and the second module is a low power wake-up reception module for receiving wake-up signals. The UE in a power saving state turns on the low power receiving module to monitor LP-WUS signals and turns off the main communication module. When downlink data arrives, a network side sends an LP-WUS signal to the UE. After detecting the LP-WUS signal through the low power receiving module, the UE decides whether to trigger the main communication module from off to on.

The basic framework of LP-WUS is as follows: a preamble field and a data field. The preamble field can be used for LP-WUS detection, synchronization, data rate determination, and carrying other information; and the data field can be used to carry the data part.

### 3. Paging mechanism

The network side can send paging to UEs in an idle state, inactive state, or connected state. A paging procedure can be triggered by a core network to notify a particular UE to receive a paging request; or triggered by a base station to notify system information updates and to notify UEs to receive information from earthquake and tsunami warning system (ETWS), commercial mobile alert system (CMAS), and the like.

In a discontinuous reception (Discontinuous Reception, DRX) cycle, the UE can monitor whether a paging-radio network temporary identify (Paging-Radio Network Temporary Identity, P-RNTI) is carried on a physical downlink control channel (Physical Downlink Control Channel, PDCCH) only at paging occasions (Paging Occasion, PO) of a corresponding paging frame (Paging Frame, PF), and then determine whether a corresponding physical downlink shared channel (Physical Downlink Shared Channel, PDSCH) is carrying a paging message.

If the UE decodes the P-RNTI from the PDCCH, the UE receives the data on the PDSCH according to parameters indicated by the PDCCH; and if the paging message (data on the PDSCH) received by the UE carries a list of UE IDs, the UE needs to match its own UE ID with the UE IDs carried in the paging message and determine if this paging message is intended for the UE itself.

If the UE does not decode the P-RNTI on the PDCCH, the UE can enter sleep mode according to the DRX cycle without the need to receive the PDSCH physical channel. With this mechanism, in one DRX cycle, the UE can receive the PDCCH only at a time position of the PO and then receive the PDSCH as needed. At other times, the UE can sleep to save power.

### 4. Paging Early Indication (Paging Early Indication, PEI)

The network side can send a paging indication to UE in an idle or inactive state. The paging indication is used to notify the UE whether there may be a paging message related to the UE. If a paging indication is detected or is true, it means that the UE associated with the paging indication may have a paging message in the next paging occasion (PO). The UE monitors a subsequent PO. If no paging indication is detected or the paging indication is false, it means that the corresponding UE has no related paging message in the current paging occasion (PO). The UE does not monitor a subsequent PO. The network side can group UEs monitoring the same PO and send paging indications to the UE group.

The following describes in detail a LP-WUS-based paging method provided in embodiments of this application through some embodiments and application scenarios thereof with reference to the accompanying drawings.

Conventionally, when low power wake-up signals are introduced into mobile cellular system, the UE needs to continuously monitor LP-WUS signals to identify whether it is being paged or not, and then wake up a main communication module at any time to receive a paging message. In order to further achieve power saving, in the low power receiving mode, it is necessary to reduce false wake-ups as much as possible, that is, to avoid wake-up of the main communication module of a target UE when there is no paging for the target UE. However, how the LP-WUS signal is designed to indicate paging is a problem to be solved.

In the embodiments of this application, the UE can execute LP-WUS monitoring, and execute a first action in the case of detecting a first LP-WUS used to wake up or page the UE, where the first action includes at least one of the following: leaving a low power state; entering an idle state; waking up a main communication module in the UE; or monitoring a paging occasion or receiving a paging message. In this solution, in a low power receiving mode, the UE in executing LP-WUS monitoring can execute a wake-up or paging related action in a case of detecting an LP-WUS used to wake up or page the UE, meaning that the LP-WUS can be used to indicate paging or wake-up to the UE in this solution. Therefore, the UE in the low power receiving mode executes the wake-up or paging related action only when detecting the LP-WUS indicating to page or wake up the UE. This avoids the problem of falsely waking up a main communication module of the UE when there is no indication of paging the UE, achieving the purposes of power saving and improving the accuracy of UE paging.

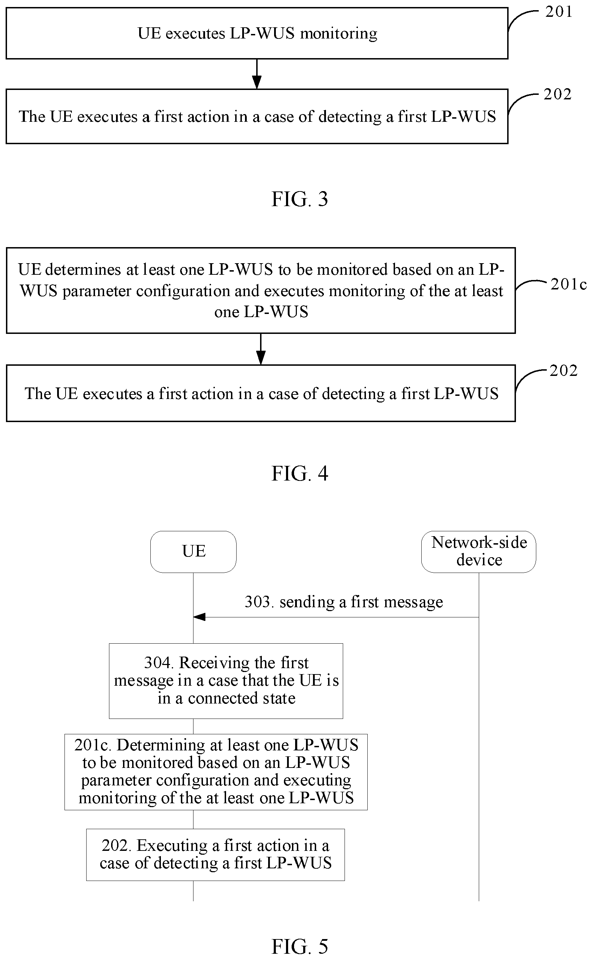

An embodiment of this application provides an LP-WUS-based paging method. FIG. 3 shows a flowchart of an LP-WUS-based paging method according to an embodiment of this application. As shown in FIG. 3, the LP-WUS-based paging method provided in this embodiment of this application may include the following step 201 and step 202.

Step 201. UE executes LP-WUS monitoring.

In this embodiment of this application, in the low power receiving mode, the UE can execute LP-WUS monitoring, so as to execute a wake-up or paging related action (the first action described in the embodiment described below) upon detecting an LP-WUS for waking up or paging the UE.

Optionally, in this embodiment of this application, when the UE is in an RRC connected state, the UE can execute LP-WUS monitoring.

Optionally, in this embodiment of this application, step 201 can specifically be implemented through at least one of the following step 201a and step 201b.

Step 201a. The UE detects a preamble field of the LP-WUS sent by a network-side device.

Step 201b. The UE detects a data field of the LP-WUS sent by the network-side device.

Step 202. The UE executes a first action in a case of detecting a first LP-WUS.

In this embodiment of this application, the first LP-WUS is used to wake up or page the UE; and the first action includes at least one of the following: leaving a low power state; entering an idle state; waking up a main communication module in the UE; or monitoring a paging occasion or receiving a paging message.

It should be noted that in the low power state, the main communication module in the UE is in a sleep mode.

Optionally, in this embodiment of this application, step 202 can specifically be implemented through either of the following step 202a or step 202b.

Step 202a. The UE executes the first action in a case of detecting a first field of the first LP-WUS.

In this embodiment of this application, the first field includes at least one of a preamble field and a data field, and the first field is used to indicate waking up or paging the UE.

In this embodiment of this application, the UE determines whether it has been woken up/paged based on the preamble field and/or data field of the first LP-WUS, and executes the first action in a case of determining that the UE has been woken up/paged.

Step 202b. The UE executes the first action in a case of detecting that the first LP-WUS includes or corresponds to target UE information.

In this embodiment of this application, the target UE information is used to indicate at least one UE allowed to be woken up or paged, the at least one UE including the UE.

In this embodiment of this application, the UE determines whether it has been woken up/paged based on the target UE information included in or corresponding to the first LP-WUS, and executes the first action in a case of determining that the UE has been woken up/paged.

Optionally, in this embodiment of this application, step 202b may be specifically implemented through the following step 202b1.

Step 202b 1. The UE executes the first action in a case of detecting that the first LP-WUS includes or corresponds target UE information and in a case that the target UE information matches first information.

In this embodiment of this application, the first information includes at least one of the following: at least some bits of a temporary mobile subscriber identity of the UE, a hashed identity of the UE, at least some bits of an international mobile equipment identity of the UE, a device identity of the UE, or a UE group identity of the UE.

Optionally, in this embodiment of this application, the target UE information includes at least one of the following: a UE identity of at least one UE and a UE group identity of at least one UE. It should be noted that the UE identity of at least one UE refers to part of or complete UE identity bit information of at least one UE.

In this embodiment of this application, the UE can compare the UE identity of the at least one UE with at least some bits of the temporary mobile subscriber identity of the UE, the hashed identity of the UE, at least some bits of the international mobile equipment identity of the UE, and/or the device identity of the UE in the first information to determine whether it matches, thereby determines that the UE has been woken up/paged in a case that the UE identity of the at least one UE matches one or more items, and then executes the first action; and/or, the UE can compare the UE group identity of the at least one UE with the UE group identity of the UE in the first information to determine whether it matches, thereby determines that the UE has been woken up/paged in a case that the UE identity of the at least one UE matches the UE group identity of the UE in the first information, and then executes the first action.

Optionally, in this embodiment of this application, the UE identity of the at least one UE can include at least one of the following: at least some bits of a temporary mobile subscriber identity of at least one UE, a hashed identity of at least one UE, at least some bits of an international mobile equipment identity of at least one UE, a device identity of at least one UE, and a UE group identity of at least one UE.

Optionally, in this embodiment of this application, the temporary mobile subscriber identity may be a 5G globally unique temporary UE identity (5G Globally Unique Temporary UE Identity, 5G-S-TMSI); and the hashed identity (Hashed ID) may be a frame check sequence (Frame Check Sequence, FCS) based on at least some bits of the temporary mobile subscriber identity.

Optionally, in this embodiment of this application, the UE group identity includes at least one of the following: a paging group identity calculated based on a first identity (such as a PEI paging group identity) and a UE group identity configured by a network-side device, where the first identity includes at least one of the following: at least some bits of a temporary mobile subscriber identity of the UE, a hashed identity of the UE, at least some bits of an international mobile equipment identity of the UE, and a device identity of the UE.

It should be noted that the device identity refers to an identity that identifies the device within the network side and may be an identity that uniquely identifies the device within the scope of the network side.

Optionally, in this embodiment of this application, the target UE information includes at least one of the following: a UE identity of at least one UE and a UE group identity of at least one UE. The first LP-WUS corresponds to a first preamble field, where the first preamble field corresponds to at least one UE, or the first preamble field corresponds to a UE group to which the at least one UE belongs; and/or, the first LP-WUS includes a first data field, where the first data field includes part of or complete UE identity bit information of at least one UE, or the first data field includes a UE group identity to which the at least one UE belongs.

It can be understood that the first preamble field and/or the first data field is used to indicate the target UE information.

It should be noted that the UE group identity of at least one UE can be understood as an identity of at least one UE group obtained by grouping the at least one UE, and can be referred to as at least one UE group identity.

Optionally, in this embodiment of this application, the first preamble field corresponds to X high-order bits or most significant bits (Most significant bits) of the UE identity of the at least one UE, X being a positive integer; and/or, the first data field includes Y low-order bits or least significant bits (Least significant bits) of the UE identity of the at least one UE, Y being a positive integer.

For example, for low-order and high-order bits: assuming that the bits of a 5G-S-TMSI are <b47, b46, ..., b0>, then the low-order bits are 10 least significant bits <b9, b8, ..., b0>, and the high-order bits are <b13, b12, ..., b10>, or most significant bits are <b47, b46, ..., b10>.

Example 1: Indication of one or more UEs through a data field. UE monitors the LP-WUS sent by a network-side device. The LP-WUS includes a data field, and the data field includes one or more pieces of target UE information; and after the UE detects a first LP-WUS, if target UE information included in the data field of the first LP-WUS matches the UE, the UE receives a paging occasion or a paging message. In one case, the data field includes part of or all bits of a UE identity of one UE: The data field includes one piece of target UE information. The target UE information corresponds to the last X bits of a 5G-S-TMSI, that is, 5G-S-TMSI mod 2^{X}. In another case, the data field includes part of or all bits of UE identities of multiple UEs: The data field includes multiple pieces of target UE information, and each target UE information corresponds to the last Y bits of a 5G-S-TMSI, that is, 5G-S-TMSI mod 2^{Y}.

Example 2: Indication of a UE group through a data field. UE receives a system message, and the system message includes at least one of the following: an LP-WUS parameter configuration or number of UE groups. The UE determines a group identity of the UE. The UE monitors the LP-WUS sent by the network-side device, the LP-WUS includes a data field, and the data field includes one or more pieces of target UE information, such as the UE group identity. after the UE detects a first LP-WUS, if target UE information included in the data field of the first LP-WUS contains a UE group of the UE itself, the UE receives a paging occasion or a paging message. In one case, the data field includes one UE group identity: The data field includes one piece of target UE information, and the one piece of target UE information corresponds to one UE group identity. In another case, the data field includes multiple UE group identities: The data field includes multiple pieces of target UE information, and each piece of target UE information corresponds to a UE group identity. For example, the data field includes multiple bits, and each bit corresponds to a UE group.

Optionally, in this embodiment of this application, the first preamble field corresponds to least significant bits of the UE identity of the at least one UE; and/or, the first data field includes high-order bits or most significant bits of the UE identity of the at least one UE.

Example 3: Indication of high-order bits in the preamble field and low-order bits in a data field. UE determines an LP-WUS to be monitored; and the UE monitors the LP-WUS sent by a network-side device. The LP-WUS includes a preamble field and a data field. The preamble field and the data field together includes one or more pieces of target UE information. After the UE detects the first LP-WUS, if the target UE information included in the preamble field and the data field matches the UE identity of the UE, the UE receives a paging occasion or a paging message. The matching of the target UE information included in the preamble field and the data field with the UE identity of the UE includes: the target UE information included in the preamble field matches the UE identity of the UE, and the target UE information included in the data field matches the UE identity of the UE.

In an implementation, the UE combines the UE information included in the preamble field with the UE information included in the data field as the target UE information, where the preamble field corresponds to part of high-order bits or most significant bits of the UE identity, and the data field corresponds to part of low-order bits or least significant bits of one or more UE identities.

In another implementation, The UE identity is 5G-S-TMSI = <b47, b46, ..., b0>: The information included in the data field corresponds to low-order bits, for example, 10 least significant bits <b9, b8, ..., b0>, and the preamble field corresponds to high-order bits, for example, <b13, b12, ..., b10>, or most significant bits <b47, b46, ..., b10>.

Example 4. Indication of low-order bits in a preamble field, and indication of high-order bits in a data field: The steps executed by the UE are the same as those in Example 3, where the data field corresponds to part of high-order bits or most significant bits of the UE identity, and the preamble field corresponds to part of low-order bits or least significant bits of one or more UE identities.

In an implementation: The UE identity is 5G-S-TMSI = <b47, b46, ..., b0>: The information included in the preamble field corresponds to low-order bits, for example, 10 least significant bits <b9, b8, ..., b0>, and the data field corresponds to high-order bits, for example, <b13, b12, ..., b10>, or most significant bits <b47, b46, ..., b10>.

Optionally, in this embodiment of this application, the first preamble field corresponds to the UE group to which the at least one UE belongs, and the first data field corresponds to one or more subgroups in the UE group to which the at least one UE belongs; and/or, the first preamble field corresponds to a part of information of the UE group identity of the at least one UE, and the first data field includes another part of information of the UE group identity of the at least one UE.

Optionally, in this embodiment of this application, the first preamble field corresponds to the UE group to which the at least one UE belongs, and the first data field includes one or more UEs in the UE group to the at least one UE belongs.

Example 5: Indication of two-level grouping in a preamble field and P data fields. UE determines an LP-WUS to be monitored; and the UE monitors the LP-WUS sent by a network-side device. The LP-WUS includes a preamble field and a data field. The preamble field and the data field together includes one or more pieces of target UE information, for example, UE group identity. After the UE detects a first LP-WUS, if the target UE information included in the preamble field and the data field matches the UE group identity of the UE, the UE receives a paging occasion or a paging message. The matching of the target UE information included in the preamble field and the data field with the UE group identity of the UE includes: the target UE information included in the preamble field matches the UE group identity of the UE, and the target UE information included in the data field matches the UE group identity of the UE.

In an implementation, the UE combines the UE information included in the preamble field with the UE information included in the data field as the target UE information.

In one case, a large UE group is indicated in the preamble field, and one or more smaller UE groups in the large UE group are indicated in the data field: mode 1, two-level grouping, with N UE level-1 groups and each UE level-1 group being divided into M level-2 groups; and mode 2, N preamble fields, with each preamble field corresponding to a UE level-1 group and the data field indicating one or more level-2 groups.

In another case, a part of information of a UE group identity is indicated in the preamble field, and other parts of information of one or more UE group identities are indicated in the data field: Mode 1, the UE group identity includes N high-order bits and M low-order bits; and Mode 2, with 2^{N} preamble fields, one of the preamble fields corresponds to information of the N high-order bits of the UE group identity. For example, the UE monitors an LP-WUS with a serial number of X, the value of X is an integer value corresponding to the N high-order bits of the UE group identity, and the data field indicates low-order M bits of the one or more UE group identities or an integer value corresponding thereto. For example, the UE group identity may be binary 11110000, an integer value corresponding to the 4 high-order bits, that is, the binary "1111," is 15, and an integer value corresponding to the 4 low-order bits, that is, the binary "0000," is 0.

It should be noted that the low-order and high-order described in the examples of this embodiment of this application can be exchanged, and this is not limited in this embodiment of this application.

Example 6: Indication of a UE group in a preamble field and a data field. The steps executed by the UE are the same as those in Example 5, where one preamble field corresponds to a group of UEs, and the data field corresponds to one or more UEs in the same UE group, for example, corresponding to some or all bits (such as low-significant bits or high-significant bits) in one or more UE-IDs.

In an implementation: assuming that there are N UE groups, and each UE group contains no more than M UEs. There are N preamble fields, and each preamble field corresponds to a UE group, or in other words, a UE monitors the preamble field corresponding to the UE group identity, and one or more UEs in the UE group are indicated in the data field.

Optionally, in this embodiment of this application, a bit length of the target UE information is determined by a type or length of the first preamble field; and/or, a bit length of the target UE information is determined by a length of the first data field.

It can be understood that different preamble field lengths correspond to different bit lengths of the target UE information. The UE can determine target UE information corresponding to the first preamble field based on the received first preamble field. For example, assuming that two types of preamble fields are defined: preamble field type 1 is a long sequence and contains 2X preamble fields and X-bit target UE information, and the UE can check whether the UE identity matches the X-bit target UE information; preamble field type 2 is a short sequence, contains 2Y preamble fields and Y-bit target UE information, and the UE can check whether the UE identity matches the Y-bit target UE information. In a case that the UE identity matches X-bit target UE information, the UE determines the X-bit target UE information as the target UE information corresponding to the first preamble field; or in a case that the UE identity matches Y-bit target UE information, the UE determines the Y-bit target UE information as the target UE information corresponding to the first preamble field.

Example 7: Indication of target UE information through dynamic preamble fields. UE receives a system message, the system message includes an LP-WUS parameter configuration, including various types of preamble fields, such as preamble field type 1 and preamble field type 2, and different types of preamble fields have different sequence lengths for indicating different target UE information and a bit range of the UE identity corresponds to the target UE information included in the preamble field, such as an X-bit portion starting from the n-th bit and above: <bn+x-1, bn+x-2, bn+x-3, ..., bn>. A network-side device dynamically sends different types of preamble fields. The UE monitors the LP-WUS sent by the network-side device, if the UE detects a first LP-WUS, the UE determines the target UE information based on the received preamble field; and if the target UE information matches the UE, the UE receives a paging occasion or a paging message.

In an implementation, two types of preamble fields are defined: preamble field type 1, containing 2x preamble fields, where the 2x preamble fields include X-bit target UE information, and UE checks whether the UE identity matches the X-bit target UE information, for example, the UE compares the target UE information with <bn+x-1, bn+x-2, bn+x-3, ..., bn> in the UE identity, where parameter n is prescribed by a protocol or configured by a network side, for example, X = 13 and the preamble field is a long sequence; and preamble field type 2, containing 2y preamble fields and Y-bit target UE information, where the UE checks whether the UE identity matches the Y-bit target UE information, for example, X = 8, the preamble field is a short sequence, and the UE compares the target UE information with <bn+y-1, bn+y-2, bn+y-3, ..., bn> in the UE identity, where parameter n is prescribed by a protocol or configured by the network side.

It can be understood that different data field lengths correspond to different bit lengths of the target UE information. The UE can determine the target UE information corresponding to the first data field based on the received first data field. For example, assuming that the target UE information carried by the data field includes X-bit target UE information, Y-bit target UE information, and Z-bit target UE information; the UE can check whether the UE identity matches any of the X-bit target UE information, Y-bit target UE information, and Z-bit target UE information. In a case that the UE identity matches one of the X-bit target UE information, Y-bit target UE information, and Z-bit target UE information, the UE determines the matched target UE information as the target UE information corresponding to the first data field.

Example 8: Indication of target UE information through dynamic data field lengths. UE monitors the LP-WUS sent by a network-side device. The LP-WUS includes a data field, and the data field includes one or more pieces of target UE information, such as UE identity or UE group identity. The data field includes various data field lengths: different data field lengths correspond to different bit lengths of the target UE information. For example, the target UE information carried by the data field includes at least one of the following: {X-bit UE_ID1; Y-bit UE_ID2; Z-bit UE_ID3 }, and the UE checks whether the UE identity matches any of the target UE information. After the UE detects a first LP-WUS, if the target UE information included in the data field contains a UE group to which the UE belongs, the UE receives a paging occasion or a paging message.

Optionally, in this embodiment of this application, a length of the first data field is determined by a type of the first preamble field.

It can be understood that different types of preamble fields indicate different data field lengths. The UE can determine the length of the first data field corresponding to the first preamble field based on the received first preamble field. For example, assuming that two types of preamble fields are defined: preamble field type 1, being a long sequence and indicating that the length of each target UE information in the data field is X bits; and preamble field type 2, being a short sequence and indicating that the length of each target UE information in the data field is Y bits. The UE can check whether the UE identity matches any of the target UE information and determine the matched target UE information as the target UE information included or corresponding to the first LP-WUS.

Example 9: Dynamic indication of different data field lengths through a preamble field. UE receives a system message, the system message includes an LP-WUS parameter configuration, including various types of preamble fields, such as preamble field type 1 and preamble field type 2, different types of preamble fields have different sequence lengths, and data field lengths indicated by different types of preamble fields are different. A network-side device dynamically sends different types of preamble fields. The UE monitors the LP-WUS sent by the network-side device, if the UE detects a first LP-WUS, the UE determines a data field length based on the received preamble field, then further determines the target UE information, and if the target UE information matches the UE, the UE receives a paging occasion or a paging message.

In an implementation, two types of preamble fields are defined: preamble field type 1, indicating that the data field includes X-bit target UE information, where the UE checks whether the UE identity matches the X-bit target UE information, for example, the preamble field is a long sequence and X = 13; and preamble field type 2, indicating that the data field contains Y-bit target UE information, where the UE checks whether the UE identity matches the Y-bit target UE information, for example, the preamble field is a short sequence and Y = 8.

In this embodiment of this application, different preamble fields and/or different lengths of data fields indicate target UE information of different lengths, which is beneficial for supporting various UE grouping strategies and paging requirements.

It should be noted that the UE can determine the target UE information included or corresponding to the first LP-WUS by combining the length of the first preamble field and the length of the first data field.

Example 10: Dynamic preamble field length and dynamic data field length are used to dynamically match the UE identity (that is, a combination of Examples 7 and 8). The UE combines the UE information indicated by the received preamble field and data field as the target UE information. The preamble field is a different type of preamble field dynamically sent by a network-side device, for example, preamble field type 1 that includes X-bit UE information. The data field length is indicated according to the preamble field type. For example, the preamble field type 1 indicates the data field is Y bits or includes Y-bit UE information. The target UE information is a combination of the X-bit target UE information indicated by the preamble field and the Y-bit UE information included in the data field. The combination mode is that X bits are in the high-order positions and Y bits are in the low-order positions, or X bits are in the low-order positions and Y bits are in the high-order positions. The UE checks whether the UE identity matches any of the target UE information.

In this embodiment of this application, the first field (that is, the preamble field and/or data field) of the first LP-WUS is used to indicate UE and/or a UE group, to support a variety of scales of UE numbers and different precision levels of false wake-up rates, providing flexibility for different UE characteristics and network deployments to achieve better power saving performance.

An embodiment of this application provides an LP-WUS-based paging method. UE can execute LP-WUS monitoring and execute a first action in a case of detecting a first LP-WUS used to wake up or page the UE, where the first action includes at least one of the following: leaving a low power state; entering an idle state; waking up a main communication module in the UE; or monitoring a paging occasion or receiving a paging message. In this solution, in a low power receiving mode, the UE in executing LP-WUS monitoring can execute a wake-up or paging related action in a case of detecting an LP-WUS used to wake up or page the UE, meaning that the LP-WUS can be used to indicate paging or wake-up to the UE in this solution. Therefore, the UE in the low power receiving mode executes the wake-up or paging related action only when detecting the LP-WUS indicating to page or wake up the UE. This avoids the problem of falsely waking up a main communication module of the UE when there is no indication of paging the UE, achieving the purposes of power saving and improving the accuracy of UE paging.

Optionally, in this embodiment of this application, with reference to FIG. 3, as shown in FIG. 4, the step 201 may be specifically implemented through the following step 201c.

Step 201c. The UE determines at least one LP-WUS to be monitored based on an LP-WUS parameter configuration and executes monitoring of the at least one LP-WUS.

In this embodiment of this application, the at least one LP-WUS includes a first LP-WUS; and the LP-WUS parameter configuration is used to configure an LP-WUS to be monitored for one or more UEs, where the one or more UEs include the UE.

In this embodiment of this application, the UE can determine one or more LP-WUSs to be monitored based on the LP-WUS parameter configuration; and the UE executes LP-WUS monitoring, and executes the first action in a case of detecting the first LP-WUS.

Optionally, in this embodiment of this application, the at least one LP-WUS can also be prescribed by a protocol or predefined.

Optionally, in this embodiment of this application, with reference to FIG. 4, as shown in FIG. 5, before step 201c, the LP-WUS-based paging method provided in this embodiment of this application further include the following step 301 and step 302 or, before step 201c, the LP-WUS-based paging method provided in this embodiment of this application further include the following step 303 and step 304.

Step 301. A network-side device sends a system message to UE.

Step 302. The UE receives the system message sent by the network-side device.

In this embodiment of this application, the system message includes the LP-WUS parameter configuration.

Step 303. The network-side device sends a first message to the UE.

Step 304: The UE receives the first message sent by the network-side device in a case that the UE is in a connected state.

In this embodiment of this application, the first message includes the LP-WUS parameter configuration. The first message is a radio resource control (Radio Resource Control, RRC) message or a non-access stratum (Non-Access Stratum, NAS) message.

It should be noted that in FIG. 5, only the execution of step 303 and step 304 before step 201c is illustrated as an example, and a process of executing step 301 and step 302 before step 201c is not illustrated in FIG. 5.

Optionally, in this embodiment of this application, "the UE determines at least one LP-WUS to be monitored based on an LP-WUS parameter configuration" in step 201c can specifically be implemented through any of the following step 201c1 to step 201c3.

Step 201c1. The UE determines at least one LP-WUS corresponding to the UE identity from LP-WUSs configured by the LP-WUS parameter configuration based on the UE identity.

For example, the UE can calculate at least one LP-WUS corresponding to the UE identity through LP-WUS_index = [UE_ID] mod N, where the number of LP-WUSs is N, and N is an integer greater than or equal to 0; and [UE_ID] is part of or complete bit information of the UE identity.

Example 11: Indication of UE through a preamble field. The UE receives a system message, and the system message includes an LP-WUS parameter configuration where N LP-WUSs are configured. The UE determines an LP-WUS to be monitored, for example, determining an LP-WUS serial number through LPWUS_index = UE_ID mod N, where the LP-WUS serial number can also be understood as a preamble field serial number. The UE monitors the LP-WUS sent by the network-side device, and if the UE detects a first LP-WUS, the UE monitors a paging occasion or receives a paging message. For example, the LP-WUS parameter configuration is as follows: N = 248, the UE identity is 5G-S-TMSI, which can be understood as indicating only one UE through the preamble field; N = 210, the UE identity is 5G-S-TMSI mod 1024; and N = 28, the UE identity is 5G-S-TMSI mod 256.

Step 201c2. The UE determines the at least one LP-WUS corresponding to a target LP-WUS identity from LP-WUSs configured by the LP-WUS parameter configuration based on the target LP-WUS identity sent by the network-side device.

Step 201c3. The UE determines the at least one LP-WUS corresponding to an identity of a group to which the UE belongs from LP-WUSs configured by the LP-WUS parameter configuration based on at least one UE group identity.

In this embodiment of this application, the least one UE group identity is used to indicate at least one UE group obtained by grouping one or more UEs, and one UE group corresponds to one LP-WUS, or multiple UE groups correspond to one LP-WUS.

Example 12: Indication of a UE group through a preamble field. UE receives a system message, and the system message includes an LP-WUS parameter configuration (where N LP-WUSs are configured) and/or the number of UE groups. The UE determines a UE group identity. For example, the UE group identity is a PEI paging group identity, or the UE group identity is a UE group identity configured by a network-side device through receiving an RRC or NAS message, or the UE group identity is a UE group identity calculated based on the UE identity and the number of UE groups. For example, UE group identity = (UE_ID) mod the number of UE groups, where the UE-ID is part of or all bits of a 5G-S-TMSI, such as 5G-S-TMSI mod 1024 or 5G-S-TMSI/1024 (that is, taking all bits except the lowest 10 bits). The UE determines an LP-WUS to be monitored, for example, determining an LP-WUS serial number through the formula LPWUS_index = UE group identity mod N (N is a positive integer, and N is the number of LP-WUSs). One UE group corresponds to one LP-WUS (the UE group identity is the LPWUS_index), or one or more UE groups correspond to one LP-WUS. The UE monitors the LP-WUS sent by the network-side device, and after the UE detects a first LP-WUS, the UE receives a paging occasion or a paging message. For example, the LP-WUS parameter configuration is as follows: N = 8, and the number of PEI UE groups is 8, which can be understood as one preamble field corresponding to one UE group; N = 8, and the number of UE groups is 16, which can be understood as multiple UE groups corresponding to one LP-WUS; N = 213, and the number of UE groups is 213, which can be understood as one preamble field corresponding to one UE group and UE group identity = UE-ID mod 213.

In this embodiment of this application, the UE in executing LP-WUS monitoring can first determine at least one LP-WUS to be monitored based on the LP-WUS parameter configuration and execute the first action in a case of detecting one LP-WUS (for example, the first LP-WUS) of at least one LP-WUS. In other words, the first LP-WUS is an LP-WUS determined based on the LP-WUS parameter configuration and used to wake up or page the UE. Thus, the UE executes the first action while the LP-WUS determined by the LP-WUS parameter configuration for waking up or paging the UE is detected, thereby improving the accuracy of the UE in executing the first action.

The LP-WUS-based paging method provided in this embodiment of this application may alternatively be executed by an LP-WUS-based paging apparatus. In an embodiment of this application, UE executing an LP-WUS-based paging method is used as an example to describe an LP-WUS-based paging apparatus provided in the embodiments of this application.

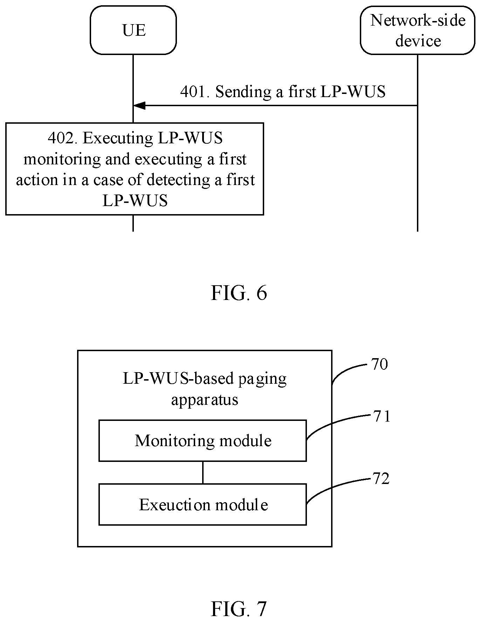

An embodiment of this application provides an LP-WUS-based paging method. FIG. 6 shows a flowchart of an LP-WUS-based paging method according to an embodiment of this application. As shown in FIG. 6, the LP-WUS-based paging method provided in this embodiment of this application may include the following step 401 and step 402.

Step 401. A network-side device sends a first LP-WUS to UE.

In this embodiment of this application, the first LP-WUS is used to wake up or page the UE, where the first LP-WUS is used for UE to execute a first action, and the first action includes at least one of the following:
leaving a low power state;
entering an idle state;
waking up a main communication module in the UE; or
monitoring a paging occasion or receiving a paging message.

Optionally, in this embodiment of this application, step 401 can specifically be implemented through at least one of the following step 401a and step 401b.

Step 401a. The network-side device sends a preamble field of the first LP-WUS to the UE.

Step 401b. The network-side device sends a data field of the first LP-WUS to the UE.

Step 402. The UE executes LP-WUS monitoring and executes a first action in a case of detecting a first LP-WUS.

Optionally, in this embodiment of this application, the first LP-WUS is specifically used for the UE to execute the first action in a case of detecting the first field of the first LP-WUS, where the first field includes at least one of the preamble field and the data field, and the first field is used to indicate waking up or paging the UE; or, the first LP-WUS is specifically used for the UE to execute the first action in the case of detecting that the first LP-WUS includes or corresponds to target UE information, the target UE information being used to indicate at least one UE allowed to be woken up or paged and the at least one UE including the UE.

Optionally, in this embodiment of this application, the first LP-WUS is specifically used for the UE to execute the first action in a case of detecting that the first LP-WUS includes or corresponds to target UE information and in a case that the target UE information matches first information; where the first information includes at least one of the following: at least some bits of a temporary mobile subscriber identity of the UE, a hashed identity of the UE, at least some bits of an international mobile equipment identity of the UE, a device identity of the UE, or a UE group identity of the UE.

Optionally, in this embodiment of this application, the UE group identity of the UE includes at least one of the following: a paging group identity calculated based on a first identity or a UE group identity configured by a network-side device; where the first identity includes at least one of the following: at least some bits of a temporary mobile subscriber identity of the UE, a hashed identity of the UE, at least some bits of an international mobile equipment identity of the UE, and a device identity of the UE.

Optionally, in this embodiment of this application, the target UE information includes at least one of the following: a UE identity of at least one UE and a UE group identity of at least one UE. The first LP-WUS corresponds to a first preamble field, where the first preamble field corresponds to at least one UE, or the first preamble field corresponds to a UE group to which the at least one UE belongs; and/or, the first LP-WUS includes a first data field, where the first data field includes part of or complete UE identity bit information of at least one UE, or the first data field includes a UE group identity to which the at least one UE belongs.

Optionally, in this embodiment of this application, the first preamble field corresponds to X high-order bits or most significant bits of the UE identity of at least one UE, X being a positive integer; and/or, the first data field includes Y low-order bits or least significant bits of the UE identity of at least one UE, Y being a positive integer.

Optionally, in this embodiment of this application, the first preamble field corresponds to least significant bits of the UE identity of the at least one UE; and/or, the first data field includes high-order bits or most significant bits of the UE identity of the at least one UE.

Optionally, in this embodiment of this application, the first preamble field corresponds to the UE group to which the at least one UE belongs, and the first data field corresponds to one or more subgroups in the UE group to which the at least one UE belongs; and/or, the first preamble field corresponds to a part of information of the UE group identity of the at least one UE, and the first data field includes another part of information of the UE group identity of the at least one UE.

Optionally, in this embodiment of this application, the first preamble field corresponds to the UE group to which the at least one UE belongs, and the first data field includes one or more UEs in the UE group to the at least one UE belongs.

Optionally, in this embodiment of this application, a bit length of the target UE information is determined by a type or length of the first preamble field; and/or, a bit length of the target UE information is determined by a length of the first data field.

Optionally, in this embodiment of this application, a length of the first data field is determined by a type of the first preamble field.

Optionally, in this embodiment of this application, before step 401, the LP-WUS-based paging method provided in this embodiment of this application further includes the following step 403 or step 404.

Step 403. The network-side device sends a system message to the UE, the system message including an LP-WUS parameter configuration.

Step 404. The network-side device sends a first message to the UE, and the first message includes an LP-WUS parameter configuration.

In this embodiment of this application, the first message is an RRC message or a NAS message.

In this embodiment of this application, the LP-WUS parameter configuration is used to configure an LP-WUS to be monitored for one or more UEs, the one or more UEs including the UE; and the LP-WUS parameter configuration is used for the UE to determine at least one LP-WUS to be monitored, the at least one LP-WUS including the first LP-WUS.

It should be noted that for a description of step 401 and step 402 and their related solutions, reference can be made to the descriptions of the foregoing embodiments, and details are not repeated herein.

In this embodiment of this application, the network-side device may send the first LP-WUS to the UE, so that the UE executes the first action in a case of detecting the first LP-WUS used to wake up or page the UE. In this solution, in a low power receiving mode, the network-side device may send to the UE a first LP-WUS used to wake up or page the UE, so that the UE in executing LP-WUS monitoring can execute a wake-up or paging related action when detecting the LP-WUS used to wake up or page the UE, meaning that the LP-WUS can be used to indicate paging or wake-up to the UE in this solution. Therefore, the UE in the low power receiving mode executes the wake-up or paging related action only when detecting the LP-WUS indicating to page or wake up the UE. This avoids the problem of falsely waking up a main communication module of the UE when there is no indication of paging the UE, achieving the purposes of power saving and improving the accuracy of UE paging.

The LP-WUS-based paging method provided in this embodiment of this application may alternatively be executed by an LP-WUS-based paging apparatus. In an embodiment of this application, a network-side device executing an LP-WUS-based paging method is used as an example to describe an LP-WUS-based paging apparatus provided in the embodiments of this application.

FIG. 7 is a possible schematic structural diagram of an LP-WUS-based paging apparatus according to an embodiment of this application. The LP-WUS-based paging apparatus is applied to UE. As shown in FIG. 7, the LP-WUS-based paging apparatus 70 may include a monitoring module 71 and an execution module 72.

The monitoring module 71 is configured to execute LP-WUS monitoring. The execution module 72 is configured to execute a first action in a case that the monitoring module 71 detects a first LP-WUS, the first LP-WUS being used to wake up or page the UE; where the first action includes at least one of the following:
leaving a low power state;
entering an idle state;
waking up a main communication module in the UE; or
monitoring a paging occasion or receiving a paging message.

An embodiment of this application provides an LP-WUS-based paging apparatus. In a low power receiving mode, the LP-WUS-based paging apparatus in executing LP-WUS monitoring can execute a wake-up or paging related action in a case of detecting an LP-WUS used to wake up or page the UE, meaning that the LP-WUS can be used to indicate paging or wake-up to the UE in this solution. Therefore, the LP-WUS-based paging apparatus in the low power receiving mode executes the wake-up or paging related action only when detecting the LP-WUS indicating to page or wake up the UE. This avoids the problem of falsely waking up a main communication module of the UE when there is no indication of paging the UE, achieving the purposes of power saving and improving the accuracy of UE paging.

In a possible implementation, the monitoring module 71 is specifically configured for at least one of the following: detecting a preamble field of an LP-WUS sent by a network-side device; or detecting a data field of an LP-WUS sent by a network-side device.

In a possible implementation, the execution module 72 is specifically configured to: execute the first action in a case of detecting a first field of the first LP-WUS, where the first field includes at least one of a preamble field and a data field, and the first field is used to indicate waking up or paging the UE; or, execute the first action in a case of detecting that the first LP-WUS includes or corresponds to target UE information, the target UE information being used to indicate at least one UE allowed to be woken up or paged and the at least one UE including the UE.

In a possible implementation, the execution module 72 is specifically configured to execute the first action in a case of detecting that the first LP-WUS includes or corresponds to the target UE information and in a case that the target UE information matches first information; where the first information includes at least one of the following: at least some bits of a temporary mobile subscriber identity of the UE, a hashed identity of the UE, at least some bits of an international mobile equipment identity of the UE, a device identity of the UE, or a UE group identity of the UE.

In a possible implementation, the UE group identity of the UE includes at least one of the following: a paging group identity calculated based on a first identity or a UE group identity configured by a network-side device; where the first identity includes at least one of the following: at least some bits of a temporary mobile subscriber identity of the UE, a hashed identity of the UE, at least some bits of an international mobile equipment identity of the UE, and a device identity of the UE.

In a possible implementation, the target UE information includes at least one of the following: a UE identity of the at least one UE and a UE group identity of the at least one UE. The first LP-WUS corresponds to a first preamble field, where the first preamble field corresponds to at least one UE, or the first preamble field corresponds to a UE group of the at least one UE; and/or, the first LP-WUS includes a first data field, where the first data field includes part of or complete UE identity bit information of the at least one UE, or the first data field includes a UE group identity of the at least one UE.

In a possible implementation, the first preamble field corresponds to X high-order bits or most significant bits of the UE identity of the at least one UE, X being a positive integer; and/or, the first data field includes Y low-order bits or least significant bits of the UE identity of at least one UE, Y being a positive integer.

In a possible implementation, the first preamble field corresponds to least significant bits of the UE identity of the at least one UE; and/or, the first data field includes high-order bits or most significant bits of the UE identity of the at least one UE.

In a possible implementation, the first preamble field corresponds to the UE group to which the at least one UE belongs, and the first data field corresponds to one or more subgroups in the UE group to which the at least one UE belongs; and/or, the first preamble field corresponds to a part of information of the UE group identity of the at least one UE, and the first data field includes another part of information of the UE group identity of the at least one UE.

In a possible implementation, the first preamble field corresponds to the UE group to which the at least one UE belongs, and the first data field includes one or more UEs in the UE group to which the at least one UE belongs.

In a possible implementation, a bit length of the target UE information is determined by a type or length of the first preamble field; and/or, a bit length of the target UE information is determined by a length of the first data field.

In a possible implementation, the length of the first data field is determined by the type of the first preamble field.

In a possible implementation, the monitoring module 71 is specifically configured to determine at least one LP-WUS to be monitored based on LP-WUS parameter configuration and execute monitoring of the at least one LP-WUS, the at least one LP-WUS including the first LP-WUS; where the LP-WUS parameter configuration is used to configure an LP-WUS to be monitored for one or more UEs, the one or more UEs including the UE.

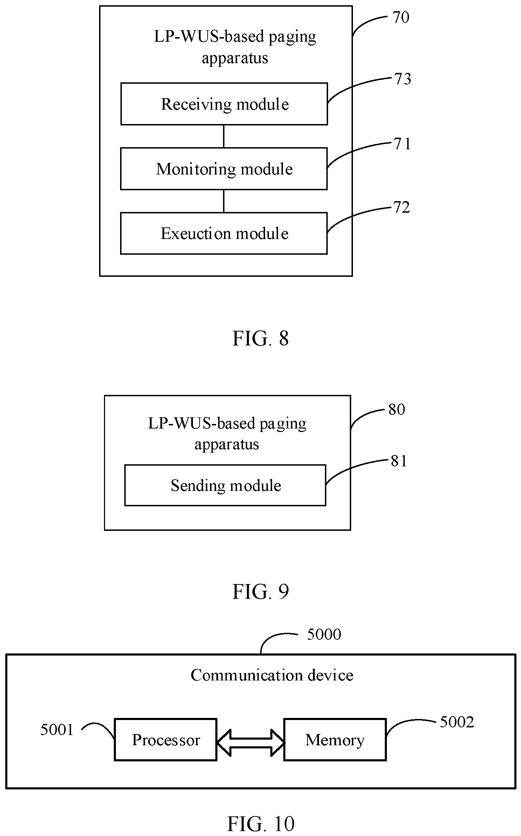

In a possible implementation, with reference to FIG. 7, as shown in FIG. 8, the LP-WUS-based paging apparatus provided in this embodiment of this application may further include a receiving module 73. The receiving module 73 is configured to receive a system message sent by the network-side device before the monitoring module 71 determines at least one LP-WUS to be monitored based on an LP-WUS parameter configuration, the system message including the LP-WUS parameter configuration; or, receive a first message in a case that the UE is in a connected state, where the first message includes the LP-WUS parameter configuration, and the first message is an RRC message or a NAS message.

In a possible implementation, the monitoring module 71 is specifically configured to determine the at least one LP-WUS corresponding to the UE identity from LP-WUSs configured by the LP-WUS parameter configuration based on the UE identity; or, determine the at least one LP-WUS corresponding to a target LP-WUS identity from LP-WUSs configured by the LP-WUS parameter configuration based on the target LP-WUS identity sent by the network-side device; or, determine the at least one LP-WUS corresponding to an identity of a group to which the UE belongs from LP-WUSs configured by the LP-WUS parameter configuration based on at least one UE group identity, where the at least one UE group identity is used to indicate at least one UE group obtained by grouping one or more UEs, and one UE group corresponds to one LP-WUS, or multiple UE groups correspond to one LP-WUS.

The LP-WUS-based paging apparatus in this embodiment of this application can be UE, such as UE with an operating system, or a component in the UE, such as an integrated circuit or chip. The UE may be a terminal or a device other than terminals. For example, the UE may include but is not limited to the types of the UE 11 listed above, and the other devices may be servers, network attached storage (Network Attached Storage, NAS), or the like. This is not specifically limited in the embodiments of this application.

The LP-WUS-based paging apparatus provided in this embodiment of this application can implement the processes that are implemented by the UE in the foregoing method embodiment, with the same technical effects achieved. To avoid repetition, details are not repeated herein.

FIG. 9 is a possible schematic structural diagram of an LP-WUS-based paging apparatus according to an embodiment of this application. The LP-WUS-based paging apparatus is applied to a network-side device. As shown in FIG. 9, the LP-WUS-based paging apparatus 80 may include a sending module 81.

The sending module 81 is configured to send a first LP-WUS to UE, the first LP-WUS being used to wake up or page the UE; where the first LP-WUS is used for the UE to execute a first action, and the first action includes at least one of the following:
leaving a low power state;
entering an idle state;
waking up a main communication module in the UE; or
monitoring a paging occasion or receiving a paging message.

An embodiment of this application provides an LP-WUS-based paging apparatus. In a low power receiving mode, the LP-WUS-based paging apparatus may send to UE a first LP-WUS used to wake up or page the UE, so that the UE in executing LP-WUS monitoring can execute a wake-up or paging related action in a case of detecting an LP-WUS used to wake up or page the UE, meaning that the LP-WUS can be used to indicate paging or wake-up to the UE in this solution. Therefore, the UE in the low power receiving mode executes the wake-up or paging related action only when detecting the LP-WUS indicating to page or wake up the UE. This avoids the problem of falsely waking up a main communication module of the UE when there is no indication of paging the UE, achieving the purposes of power saving and improving the accuracy of UE paging.

In a possible implementation, the sending module 81 is configured for at least one of the following: sending a preamble field of the first LP-WUS to the UE; or sending a data field of the first LP-WUS to the UE.

In a possible implementation, the first LP-WUS is specifically used for the UE to execute the first action in a case of detecting the first field of the first LP-WUS, where the first field includes at least one of the preamble field and the data field, and the first field is used to indicate waking up or paging the UE; or, the first LP-WUS is specifically used for the UE to execute the first action in the case of detecting that the first LP-WUS includes or corresponds to target UE information, the target UE information being used to indicate at least one UE allowed to be woken up or paged and the at least one UE including the UE.

In a possible implementation, the first LP-WUS is specifically configured for the UE to execute the first action in a case of detecting that the first LP-WUS includes or corresponds to the target UE information and in a case that the target UE information matches first information; where the first information includes at least one of the following: at least some bits of a temporary mobile subscriber identity of the UE, a hashed identity of the UE, at least some bits of an international mobile equipment identity of the UE, a device identity of the UE, or a UE group identity of the UE.

In a possible implementation, the UE group identity of the UE includes at least one of the following: a paging group identity calculated based on a first identity or a UE group identity configured by a network-side device; where the first identity includes at least one of the following: at least some bits of a temporary mobile subscriber identity of the UE, a hashed identity of the UE, at least some bits of an international mobile equipment identity of the UE, and a device identity of the UE.

In a possible implementation, the target UE information includes at least one of the following: a UE identity of the at least one UE and a UE group identity of the at least one UE. The first LP-WUS corresponds to a first preamble field, where the first preamble field corresponds to at least one UE, or the first preamble field corresponds to a UE group to which the at least one UE belongs; and/or, the first LP-WUS includes a first data field, where the first data field includes part of or complete UE identity bit information of at least one UE, or the first data field includes a UE group identity to which the at least one UE belongs.

In a possible implementation, the first preamble field corresponds to X high-order bits or most significant bits of the UE identity of the at least one UE, X being a positive integer; and/or, the first data field includes Y low-order bits or least significant bits of the UE identity of at least one UE, Y being a positive integer.

In a possible implementation, the first preamble field corresponds to least significant bits of the UE identity of the at least one UE; and/or, the first data field includes high-order bits or most significant bits of the UE identity of the at least one UE.

In a possible implementation, the first preamble field corresponds to the UE group to which the at least one UE belongs, and the first data field corresponds to one or more subgroups in the UE group to which the at least one UE belongs; and/or, the first preamble field corresponds to a part of information of the UE group identity of the at least one UE, and the first data field includes another part of information of the UE group identity of the at least one UE.

In a possible implementation, the first preamble field corresponds to the UE group to which the at least one UE belongs, and the first data field includes one or more UEs in the UE group to which the at least one UE belongs.

In a possible implementation, a bit length of the target UE information is determined by a type or length of the first preamble field; and/or, a bit length of the target UE information is determined by a length of the first data field.

In a possible implementation, the length of the first data field is determined by the type of the first preamble field.

In a possible implementation, the sending module 81 is further configured to, before sending the first LP-WUS to the UE, send a system message to the UE, the system message including a LP-WUS parameter configuration; or, send a first message to the UE, where the first message includes a LP-WUS parameter configuration, and the first message is an RRC message or a NAS message; where the LP-WUS parameter configuration is used to configure an LP-WUS to be monitored for one or more UEs, the one or more UEs including the UE; and the LP-WUS parameter configuration is used for the UE to determine at least one LP-WUS to be monitored, the at least one LP-WUS including the first LP-WUS.

The LP-WUS-based paging apparatus provided in this embodiment of this application can implement the processes that are implemented by a network-side device in the foregoing method embodiment, with the same technical effects achieved. To avoid repetition, details are not repeated herein.

Optionally, as shown in FIG. 10, an embodiment of this application further provides a communication device 5000, including a processor 5001 and a memory 5002. The memory 5002 has stored thereon a program or instruction capable of running on the processor 5001. For example, if the communication device 5000 is UE, when the program or instruction is executed by the processor 5001, the steps of the foregoing method embodiment on the UE side are implemented, with the same technical effects achieved. To avoid repetition, details are not repeated herein. If the communication device 5000 is a network-side device, when the program or instruction is executed by the processor 5001, the steps of the foregoing method embodiment on the network-side device side are implemented, with the same technical effects achieved. To avoid repetition, details are not repeated herein.

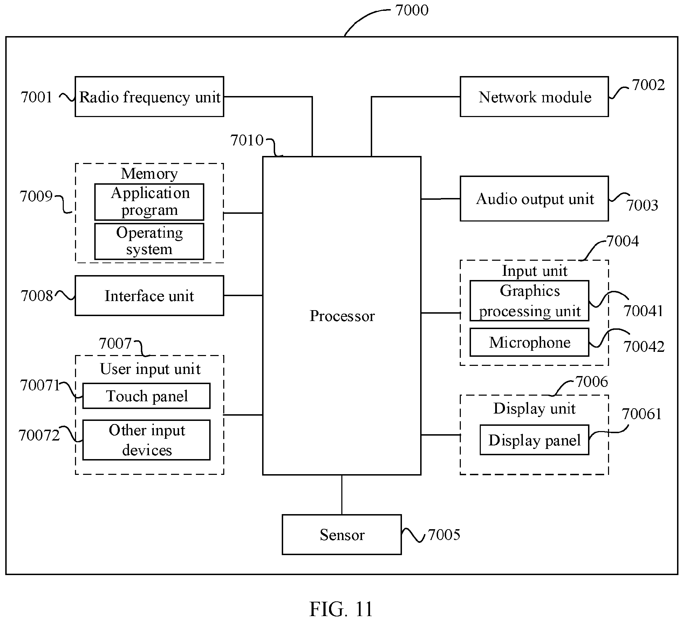

An embodiment of this application further provides UE, including a processor and communication interface. The processor is configured to execute LP-WUS monitoring and execute a first action in a case of detecting a first LP-WUS, the first LP-WUS being used to wake up or page the UE; where the first action includes at least one of the following: leaving a low power state; entering an idle state; waking up a main communication module in the UE; or monitoring a paging occasion or receiving a paging message. This UE embodiment corresponds to the foregoing method embodiment on the UE side. All processes and implementations in the foregoing method embodiment are applicable to this UE embodiment, with the same technical effects achieved. Specifically, FIG. 11 is a schematic diagram of a hardware structure of UE implementing embodiments of this application.

The UE 7000 includes but is not limited to at least part of these components: a radio frequency unit 7001, a network module 7002, an audio output unit 7003, an input unit 7004, a sensor 7005, a display unit 7006, a user input unit 7007, an interface unit 7008, a memory 7009, and a processor 7010.

Persons skilled in the art can understand that the UE 7000 may further include a power supply (for example, a battery) supplying power to the components, and the power supply may be logically connected to the processor 7010 through a power management system. In this way, functions such as charge management, discharge management, and power consumption management are implemented by using the power management system. The structure of the UE shown in FIG. 11 does not constitute a limitation on the UE. The UE may include more or fewer components than those shown in the figure, or some components are combined, or component arrangements are different. Details are not described herein.

It should be understood that in this embodiment of this application, the input unit 7004 may include a graphics processing unit (Graphics Processing Unit, GPU) 70041 and a microphone 70042. The graphics processing unit 70041 processes image data of a static picture or a video that is obtained by an image capture apparatus (for example, a camera) in a video capture mode or an image capture mode. The display unit 7006 may include a display panel 70061, and the display panel 70061 may be configured in a form of a liquid crystal display, an organic light-emitting diode, and the like. The user input unit 7007 includes at least one of a touch panel 70071 and other input devices 70072. The touch panel 70071 is also referred to as a touchscreen. The touch panel 70071 may include two parts: a touch detection apparatus and a touch controller. The other input devices 70072 may include but are not limited to a physical keyboard, a function key (such as a volume control key or an on/off key), a trackball, a mouse, and a joystick. Details are not described herein.

In an embodiment of this application, the radio frequency unit 7001 receives downlink data from a network-side device and transfers the data to the processor 7010 for processing; and the radio frequency unit 7001 can additionally send uplink data to the network-side device. Generally, the radio frequency unit 7001 includes but is not limited to an antenna, an amplifier, a transceiver, a coupler, a low noise amplifier, and a duplexer.

The memory 7009 may be configured to store software programs or instructions and various data. The memory 7009 may include a first storage area for storing programs or instructions and a second storage area for storing data. The first storage area may store an operating system, an application program or instructions required by at least one function (for example, a sound playback function or an image playback function), and the like. Additionally, the memory 7009 may be a volatile memory or a non-volatile memory, or the memory 7009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 7009 in the embodiments of this application includes but is not be limited to these or any other applicable types of memories.

The processor 7010 may include one or more processing units. Optionally, the processor 7010 may integrate an application processor and a modem processor. The application processor primarily processes operations involving an operating system, user interface, application program, or the like. The modem processor primarily processes radio communication signals, for example, being a baseband processor. It can be understood that the modem processor may be alternatively not integrated in the processor 7010.

The processor 7010 is configured to execute LP-WUS monitoring and execute a first action in a case of detecting a first LP-WUS, the first LP-WUS being used to wake up or page the UE; where the first action includes at least one of the following: leaving a low power state; entering an idle state; waking up a main communication module in the UE; or monitoring a paging occasion or receiving a paging message.

An embodiment of this application provides UE. In a low power receiving mode, the UE in executing LP-WUS monitoring can execute a wake-up or paging related action in a case of detecting an LP-WUS used to wake up or page the UE, meaning that the LP-WUS can be used to indicate paging or wake-up to the UE in this solution. Therefore, the UE in the low power receiving mode executes the wake-up or paging related action only when detecting the LP-WUS indicating to page or wake up the UE. This avoids the problem of falsely waking up a main communication module of the UE when there is no indication of paging the UE, achieving the purposes of power saving and improving the accuracy of UE paging.

Optionally, the processor 7010 is specifically configured for at least one of the following: detecting a preamble field of an LP-WUS sent by a network-side device; or detecting a data field of an LP-WUS sent by a network-side device.

Optionally, the processor 7010 is specifically configured to execute the first action in a case of detecting a first field of the first LP-WUS, where the first field includes at least one of a preamble field and a data field, and the first field is used to indicate waking up or paging the UE; or, execute the first action in a case of detecting that the first LP-WUS includes or corresponds to target UE information, the target UE information being used to indicate at least one UE allowed to be woken up or paged and the at least one UE including the UE.

Optionally, the processor 7010 is specifically configured to execute the first action in a case of detecting that the first LP-WUS includes or corresponds to the target UE information and in a case that the target UE information matches first information; where the first information includes at least one of the following: at least some bits of a temporary mobile subscriber identity of the UE, a hashed identity of the UE, at least some bits of an international mobile equipment identity of the UE, a device identity of the UE, or a UE group identity of the UE.

Optionally, the processor 7010 is specifically configured to determine at least one LP-WUS to be monitored based on LP-WUS parameter configuration and execute monitoring of the at least one LP-WUS, the at least one LP-WUS including the first LP-WUS; where the LP-WUS parameter configuration is used to configure an LP-WUS to be monitored for one or more UEs, the one or more UEs including the UE.

Optionally, the radio frequency unit 7001 is configured to receive a system message sent by the network-side device before the Processor 7010 determines at least one LP-WUS to be monitored based on an LP-WUS parameter configuration, the system message including the LP-WUS parameter configuration; or, receive a first message in a case that the UE is in a connected state, where the first message includes the LP-WUS parameter configuration, and the first message is an RRC message or a NAS message.

Optionally, the processor 7010 is specifically configured to determine the at least one LP-WUS corresponding to the UE identity from LP-WUSs configured by the LP-WUS parameter configuration based on the UE identity; or, determine the at least one LP-WUS corresponding to a target LP-WUS identity from LP-WUSs configured by the LP-WUS parameter configuration based on the target LP-WUS identity sent by the network-side device; or, determine the at least one LP-WUS corresponding to an identity of a group to which the UE belongs from LP-WUSs configured by the LP-WUS parameter configuration based on at least one UE group identity, where the at least one UE group identity is used to indicate at least one UE group obtained by grouping one or more UEs, and one UE group corresponds to one LP-WUS, or multiple UE groups correspond to one LP-WUS.

The UE provided in this embodiment of this application can implement the processes that are implemented by the UE in the foregoing method embodiment, with the same technical effects achieved. To avoid repetition, details are not repeated herein.

An embodiment of this application further provides a network-side device, including a processor and a communication interface. The communication interface is configured to send a first LP-WUS to UE, the first LP-WUS being used to wake up or page the UE; where the first LP-WUS is used for the UE to execute a first action, and the first action includes at least one of the following: leaving a low power state; entering an idle state; waking up a main communication module in the UE; or monitoring a paging occasion or receiving a paging message. This network-side device embodiment corresponds to the foregoing network-side device method embodiment. All processes and implementations in the foregoing method embodiment are applicable to this network-side device embodiment, with the same technical effects achieved.

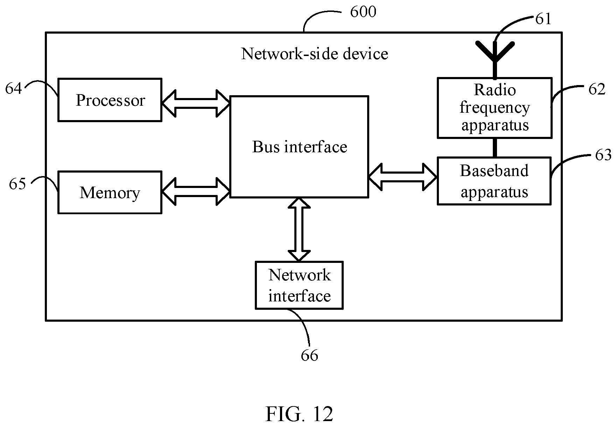

Specifically, an embodiment of this application further provides a network-side device. As shown in FIG. 12, the network-side device 600 includes an antenna 61, a radio frequency apparatus 62, a baseband apparatus 63, a processor 64, and a memory 65. The antenna 61 is connected to the radio frequency apparatus 62. In uplink, the radio frequency apparatus 62 receives information through the antenna 61, and sends the received information to the baseband apparatus 63 for processing. In downlink, the baseband apparatus 63 processes to-be-sent information, and sends the information to the radio frequency apparatus 62; and the radio frequency apparatus 62 processes the received information and then sends the information out through the antenna 61.

The method performed by the network-side device in the foregoing embodiment may be implemented on the baseband apparatus 63. The baseband apparatus 63 includes a baseband processor.

The radio frequency apparatus 62 is configured to send a first LP-WUS to UE, the first LP-WUS being used to wake up or page the UE; where the first LP-WUS is used for the UE to execute a first action, and the first action includes at least one of the following: leaving a low power state; entering an idle state; waking up a main communication module in the UE; or monitoring a paging occasion or receiving a paging message.

An embodiment of this application provides a network-side device. In a low power receiving mode, the network-side device may send to UE a first LP-WUS used to wake up or page the UE, so that the UE in executing LP-WUS monitoring can execute a wake-up or paging related action when detecting the LP-WUS used to wake up or page the UE, meaning that the LP-WUS can be used to indicate paging or wake-up to the UE in this solution. Therefore, the UE in the low power receiving mode executes the wake-up or paging related action only when detecting the LP-WUS indicating to page or wake up the UE. This avoids the problem of falsely waking up a main communication module of the UE when there is no indication of paging the UE, achieving the purposes of power saving and improving the accuracy of UE paging.

The network-side device provided in this embodiment of this application can implement the processes that are implemented by the network-side device in the foregoing method embodiment, with the same technical effects achieved. To avoid repetition, details are not repeated herein.

The baseband apparatus 63 may include, for example, at least one baseband processing unit, where a plurality of chips are disposed on the baseband processing unit. As shown in FIG. 12, one of the chips is, for example, a baseband processor, and connected to the memory 65 through a bus interface, to invoke the program in the memory 65 to perform the operations of the network device shown in the foregoing method embodiment.

The network-side device may further include a network interface 66, where the interface is, for example, a common public radio interface (common public radio interface, CPRI).

Specifically, the network-side device 600 in this embodiment of this application further includes: an instruction or program stored in the memory 65 and capable of running on the processor 64. The processor 64 invokes the instruction or program in the memory 65 to execute the method executed by the modules shown in FIG. 9, with the same technical effects achieved. To avoid repetition, details are not repeated herein.

An embodiment of this application further provides a readable storage medium. The readable storage medium has stored thereon a program or instruction. When the program or instruction is executed by a processor, the processes of the foregoing method embodiment are implemented, with the same technical effects achieved. To avoid repetition, details are not repeated herein.

The processor is the processor in the communication device in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instruction to implement the processes of the foregoing method embodiment, with the same technical effects achieved. To avoid repetition, details are not repeated herein.

It should be understood that the chip mentioned in an embodiment of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement the processes of the foregoing method embodiments, with the same technical effects achieved. To avoid repetition, details are not repeated herein.

An embodiment of this application further provides a communication system, including UE and a network-side device, where the UE can be configured to execute the steps of the foregoing LP-WUS-based paging method, and the network-side device can be configured to execute the steps of the foregoing LP-WUS-based paging method.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Based on the above description of the foregoing implementations, persons skilled in the art can clearly understand that the method in the foregoing embodiments can be implemented through software on a necessary general hardware platform or certainly through hardware only, but in many cases, the former is the more preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The embodiments of this application are described with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A low power wake-up signal LP-WUS-based paging method, comprising:
executing, by a user equipment UE, LP-WUS monitoring; and
executing, by the UE, a first action in a case of detecting a first LP-WUS, the first LP-WUS being used to wake up or page the UE; wherein the first action comprises at least one of the following:
leaving a low power state;
entering an idle state;
waking up a main communication module in the UE; or
monitoring a paging occasion or receiving a paging message.

2. The method according to claim 1, wherein the executing, by the UE, LP-WUS monitoring comprises at least one of the following:
detecting, by the UE, a preamble field of an LP-WUS sent by a network-side device; or
detecting, by the UE, a data field of an LP-WUS sent by a network-side device.

3. The method according to claim 1 or 2, wherein the executing, by the UE, a first action in a case of detecting a first LP-WUS comprises:
executing, by the UE, the first action in a case of detecting a first field of the first LP-WUS, wherein the first field comprises at least one of a preamble field and a data field, and the first field is used to indicate waking up or paging the UE;
or,
executing, by the UE, the first action in a case of detecting that the first LP-WUS comprises or corresponds to target UE information, the target UE information being used to indicate at least one UE allowed to be woken up or paged and the at least one UE comprising the UE.

4. The method according to claim 3, wherein the executing, by the UE, the first action in a case of detecting that the first LP-WUS comprises or corresponds to target UE information comprises:
executing, by the UE, the first action in a case of detecting that the first LP-WUS comprises or corresponds to the target UE information and in a case that the target UE information matches first information;
wherein the first information comprises at least one of the following: at least part of bits of a temporary mobile subscriber identity of the UE, a hashed identity of the UE, at least some bits of an international mobile equipment identity of the UE, a device identity of the UE, or a UE group identity of the UE.

5. The method according to claim 4, wherein the UE group identity of the UE comprises at least one of the following: a paging group identity calculated based on a first identity or a UE group identity configured by a network-side device;
wherein the first identity comprises at least one of the following: at least some bits of the temporary mobile subscriber identity of the UE, the hashed identity of the UE, at least some bits of the international mobile equipment identity of the UE, and the device identity of the UE.

6. The method according to claim 3, wherein the target UE information comprises least one of the following: a UE identity of the at least one UE and a UE group identity of the at least one UE;
the first LP-WUS corresponds to a first preamble field, wherein the first preamble field corresponds to the at least one UE, or the first preamble field corresponds to a UE group to which the at least one UE belongs; and/or
the first LP-WUS comprises a first data field, wherein the first data field comprises part of or complete UE identity bit information of the at least one UE, or the first data field comprises a UE group identity of the at least one UE.

7. The method according to claim 6, wherein the first preamble field corresponds to X high-order bits or most significant bits of the UE identity of the at least one UE, X being a positive integer;
and/or
the first data field comprises Y low-order bits or least significant bits of the UE identity of the at least one UE, Y being a positive integer.

8. The method according to claim 6, wherein the first preamble field corresponds to least significant bits of the UE identity of the at least one UE;
and/or
the first data field comprises high-order bits or most significant bits of the UE identity of the at least one UE.

9. The method according to claim 6, wherein the first preamble field corresponds to the UE group to which the at least one UE belongs, and the first data field corresponds to one or more subgroups in the UE group to which the at least one UE belongs;
and/or
the first preamble field corresponds to a part of information of the UE group identity of the at least one UE, and the first data field comprises another part of information of the UE group identity of the at least one UE.

10. The method according to claim 6, wherein the first preamble field corresponds to the UE group to which the at least one UE belongs, and the first data field comprises one or more UEs in the UE group to which the at least one UE belongs.

11. The method according to claim 6, wherein a bit length of the target UE information is determined by a type or length of the first preamble field;
and/or
a bit length of the target UE information is determined by a length of the first data field.

12. The method according to claim 11, wherein the length of the first data field is determined by a type of the first preamble field.

13. The method according to claim 1, wherein the executing, by the UE, LP-WUS monitoring comprises:
determining, by the UE based on an LP-WUS parameter configuration, at least one LP-WUS to be monitored and executing monitoring of the at least one LP-WUS, wherein the at least one LP-WUS comprises the first LP-WUS;
wherein the LP-WUS parameter configuration is used to configure an LP-WUS to be monitored for one or more UEs, wherein the one or more UEs comprise the UE.

14. The method according to claim 13, wherein before the determining, by the UE based on an LP-WUS parameter configuration, at least one LP-WUS to be monitored, the method further comprises:
receiving, by the UE, a system message sent by a network-side device, wherein the system message comprises the LP-WUS parameter configuration;
or,
receiving, by the UE, a first message in a case that the UE is in a connected state, wherein the first message comprises the LP-WUS parameter configuration, and the first message is a radio resource control RRC message or a non-access stratum NAS message.

15. The method according to claim 13 or 14, wherein the determining, by the UE, at least one LP-WUS to be monitored based on an LP-WUS parameter configuration comprises:
determining, by the UE, the at least one LP-WUS corresponding to a identifier of the UE from LP-WUSs configured by the LP-WUS parameter configuration based on the identifier of the UE;
or,
determining, by the UE, the at least one LP-WUS corresponding to a target LP-WUS identity from LP-WUSs configured by the LP-WUS parameter configuration based on the target LP-WUS identity sent by a network-side device;
or,
determining, by the UE, the at least one LP-WUS corresponding to an identity of a group to which the UE belongs from LP-WUSs configured by the LP-WUS parameter configuration based on at least one UE group identity, wherein the at least one UE group identity is used to indicate at least one UE group obtained by grouping one or more UEs, and one UE group corresponds to one LP-WUS, or multiple UE groups correspond to one LP-WUS.

16. A low power wake-up signal LP-WUS-based paging method, comprising:
sending, by a network-side device, a first LP-WUS to user equipment UE, the first LP-WUS being used to wake up or page the UE;
wherein the first LP-WUS is used for the UE to execute a first action, and the first action comprises at least one of the following:
leaving a low power state;
entering an idle state;
waking up a main communication module in the UE; or
monitoring a paging occasion or receiving a paging message.

17. The method according to claim 16, wherein the sending, by a network-side device, a first LP-WUS comprises at least one of the following:
sending, by the network-side device, a preamble field of the first LP-WUS to the UE; or
sending, by the network-side device, a data field of the first LP-WUS to the UE.

18. The method according to claim 16 or 17, wherein the first LP-WUS is specifically used for the UE to execute the first action in a case of detecting a first field of the first LP-WUS, the first field comprises at least one of a preamble field and a data field, and the first field is used to indicate waking up or paging the UE;
or,
the first LP-WUS is specifically used for the UE to execute the first action in a case of detecting that the first LP-WUS comprises or corresponds to target UE information, the target UE information being used to indicate at least one UE allowed to be woken up or paged and the at least one UE comprising the UE.

19. The method according to claim 18, wherein the first LP-WUS is specifically used for the UE to execute the first action in a case of detecting that the first LP-WUS comprises or corresponds to the target UE information and in a case that the target UE information matches first information;
wherein the first information comprises at least one of the following: at least some bits of a temporary mobile subscriber identity of the UE, a hashed identity of the UE, at least some bits of an international mobile equipment identity of the UE, a device identity of the UE, or a UE group identity of the UE.

20. The method according to claim 19, wherein the UE group identity of the UE comprises at least one of the following: a paging group identity calculated based on a first identity or a UE group identity configured by a network-side device;
wherein the first identity comprises at least one of the following: at least some bits of the temporary mobile subscriber identity of the UE, the hashed identity of the UE, at least some bits of the international mobile equipment identity of the UE, and the device identity of the UE.

21. The method according to claim 18, wherein the target UE information comprises least one of the following: a UE identity of the at least one UE and a UE group identity of the at least one UE;
the first LP-WUS corresponds to a first preamble field, wherein the first preamble field corresponds to the at least one UE, or the first preamble field corresponds to a UE group to which the at least one UE belongs; and/or
the first LP-WUS comprises a first data field, wherein the first data field comprises part of or complete UE identity bit information of the at least one UE, or the first data field comprises a UE group identity of the at least one UE.

22. The method according to claim 18, wherein the first preamble field corresponds to X high-order bits or most significant bits of the UE identity of the at least one UE, X being a positive integer;
and/or
the first data field comprises Y low-order bits or least significant bits of the UE identity of the at least one UE, Y being a positive integer.

23. The method according to claim 18, wherein the first preamble field corresponds to least significant bits of the UE identity of the at least one UE;
and/or
the first data field comprises high-order bits or most significant bits of the UE identity of the at least one UE.

24. The method according to claim 18, wherein the first preamble field corresponds to the UE group to which the at least one UE belongs, and the first data field corresponds to one or more subgroups in the UE group to which the at least one UE belongs;
and/or
the first preamble field corresponds to a part of information of the UE group identity of the at least one UE, and the first data field comprises another part of information of the UE group identity of the at least one UE.

25. The method according to claim 18, wherein the first preamble field corresponds to the UE group to which the at least one UE belongs, and the first data field comprises one or more UEs in the UE group to which the at least one UE belongs.

26. The method according to claim 18, wherein a bit length of the target UE information is determined by a type or length of the first preamble field;
and/or
a bit length of the target UE information is determined by a length of the first data field.

27. The method according to claim 26, wherein the length of the first data field is determined by the type of the first preamble field.

28. The method according to claim 16, wherein before the sending, by a network-side device, a first LP-WUS to user equipment UE, the method further comprises:
sending, by the network-side device, a system message to the UE, the system message comprising an LP-WUS parameter configuration;
or,
sending, by the network-side device, a first message to the UE, wherein the first message comprises an LP-WUS parameter configuration, and the first message is a radio resource control RRC message or a non-access stratum NAS message;
wherein the LP-WUS parameter configuration is used to configure an LP-WUS to be monitored for one or more UEs, the one or more UEs comprising the UE; and the LP-WUS parameter configuration is used for the UE to determine at least one LP-WUS to be monitored, the at least one LP-WUS comprising the first LP-WUS.

29. A low power wake-up signal LP-WUS-based paging apparatus, applied to user equipment UE and comprising: a monitoring module and an execution module; wherein
the monitoring module is configured to execute LP-WUS monitoring; and
the execution module is configured to execute a first action in a case that the monitoring module detects a first LP-WUS, the first LP-WUS being used to wake up or page the UE; wherein the first action comprises at least one of the following:
leaving a low power state;
entering an idle state;
waking up a main communication module in the UE; or
monitoring a paging occasion or receiving a paging message.

30. The apparatus according to claim 29, wherein the monitoring module is specifically configured for at least one of the following:
detecting a preamble field of an LP-WUS sent by a network-side device; or
detecting a data field of an LP-WUS sent by a network-side device.

31. The apparatus according to claim 29 or 30, wherein the execution module is specifically configured to:
execute the first action in a case of detecting a first field of the first LP-WUS, wherein the first field comprises at least one of a preamble field and a data field, and the first field is used to indicate waking up or paging the UE;
or,
execute the first action in a case of detecting that the first LP-WUS comprises or corresponds to target UE information, the target UE information being used to indicate at least one UE allowed to be woken up or paged and the at least one UE comprising the UE.

32. The apparatus according to claim 31, wherein the execution module is specifically configured to execute the first action in a case of detecting that the first LP-WUS comprises or corresponds to the target UE information and in a case that the target UE information matches first information;
wherein the first information comprises at least one of the following: at least some bits of a temporary mobile subscriber identity of the UE, a hashed identity of the UE, at least some bits of an international mobile equipment identity of the UE, a device identity of the UE, or a UE group identity of the UE.

33. The apparatus according to claim 29, wherein the monitoring module is specifically configured to determine at least one LP-WUS to be monitored based on an LP-WUS parameter configuration and execute monitoring of the at least one LP-WUS, wherein the at least one LP-WUS comprises the first LP-WUS;
wherein the LP-WUS parameter configuration is used to configure an LP-WUS to be monitored for one or more UEs, wherein the one or more UEs comprise the UE.

34. A low power wake-up signal LP-WUS-based paging apparatus, applied to a network-side device and comprising a sending module; wherein
the sending module is configured to send a first LP-WUS to user equipment UE, the first LP-WUS being used to wake up or page the UE;
wherein the first LP-WUS is used for the UE to execute a first action, and the first action comprises at least one of the following:
leaving a low power state;
entering an idle state;
waking up a main communication module in the UE; or
monitoring a paging occasion or receiving a paging message.

35. The apparatus according to claim 34, wherein the sending module is specifically configured for at least one of the following:
sending a preamble field of the first LP-WUS to the UE; or
sending a data field of the first LP-WUS to the UE.

36. The apparatus according to claim 34 or 35, wherein the sending module is further configured to, before sending the first LP-WUS to the UE, send a system message to the UE, the system message comprising a LP-WUS parameter configuration; or, send a first message to the UE, wherein the first message comprises a LP-WUS parameter configuration, and the first message is a radio resource control RRC message or a non-access stratum NAS message;
wherein the LP-WUS parameter configuration is used to configure an LP-WUS to be monitored for one or more UEs, the one or more UEs comprising the UE; and the LP-WUS parameter configuration is used for the UE to determine at least one LP-WUS to be monitored, the at least one LP-WUS comprising the first LP-WUS.

37. User equipment UE, comprising a processor, a memory, and a program or instruction stored in the memory and capable of running on the processor, wherein when the program or instruction is executed by the processor, the steps of the low power wake-up signal LP-WUS-based paging method according to any one of claims 1 to 15 are implemented.

38. A network-side device, comprising a processor, a memory, and a program or instruction stored in the memory and capable of running on the processor, wherein when the program or instruction is executed by the processor, the steps of the low power wake-up signal LP-WUS-based paging method according to any one of claims 16 to 28 are implemented.

39. A communication system, wherein the communication system comprises the low power wake-up signal LP-WUS-based paging apparatus according to any one of claims 29 to 33 and the LP-WUS-based paging apparatus according to any one of claims 34 to 36; or
the communication system comprises the user equipment UE according to claim 37 and the network-side device according to claim 38.

40. A readable storage medium, wherein a program or instruction is stored on the readable storage medium, and when the program or instruction is executed by a processor, the steps of the low power wake-up signal LP-WUS-based paging method according to any one of claims 1 to 15 are implemented, or the steps of the LP-WUS-based paging method according to any one of claims 16 to 28 are implemented.
